(19) Europäisches Patentamt
European Patent Office
Office européen des brevets

(11) Publication number: **0 006 336**
**B1**

(12) **EUROPEAN PATENT SPECIFICATION**

(45) Date of publication of patent specification: **11.08.82**

(51) Int. Cl.³: **C 09 D 3/58**, C 08 G 59/42, C 25 D 13/06

(21) Application number: **79301100.8**

(22) Date of filing: **11.06.79**

(54) **Aqueous emulsion coating composition comprising self-emulsifiable epoxy ester copolymer mixtures.**

(30) Priority: **12.06.78 US 914472**

(43) Date of publication of application:
**09.01.80 Bulletin 80/1**

(45) Publication of the grant of the patent:
**11.08.82 Bulletin 82/32**

(84) Designated Contracting States:
**BE DE FR GB IT NL**

(56) References cited:
DE-B-1 133 058
FR-A-1 231 985
FR-A-2 213 325
US-A-2 954 358
US-A-3 945 963

(73) Proprietor: **MOBIL OIL CORPORATION**
**150 East 42nd Street**
**New York New York 10017 (US)**

(72) Inventor: **Brown, George Lincoln**
**23 Essex Road**
**Scotch Plains, New Jersey (US)**
Inventor: **Spencer, Arthur Theodore**
**105 Madison Avenue**
**New Providence, New Jersey (US)**

(74) Representative: **Cooper, John Anthony**
**Mobil Court 3 Clements Inn**
**London WC2A 2EB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 006 336 B1

Aqueous emulsion coating composition comprising self-emulsifiable epoxy ester copolymer mixtures

This invention relates to aqueous emulsion coating compositions possessing improved stability.

The present invention provides a non-gelled composition which is self-emulsifiable in water containing hydroxy ester copolymer having carboxyl groups and substantially free of oxirane groups, which composition is the esterification reaction product of (A) an acidic copolymer comprising a solution copolymer of monoethylenically unsaturated monomers containing from 20 to 80 percent by weight monoethylenically unsaturated carboxylic acid monomer based on the total weight of the monomers; and (B) a mixture containing epoxy resin, which mixture includes at least 5 per cent by weight of aromatic polyether containing oxirane groups and at least 5 percent by weight of aromatic polyether devoid of oxirane groups, the aromatic polyethers having an average molecular weight of at least 1500, the mixture comprising 40 to 90 percent of the total resin solids and containing sufficient oxirane groups to provide a ratio of oxirane groups to carboxyl groups from 1:2 to 1:20, at least a portion of the carboxyl groups in the hydroxy ester copolymer being reacted with base to render the composition self-emulsifiable in water.

Epoxy resins contain a plurality of aromatic groups joined together by ether linkages, and hence provide excellent physical and chemical properties. It has been difficult to employ such resins in aqueous medium because they lack storage stability. This is of particular importance when spray application is contemplated, especially for the interior of sanitary cans. The slightest change in the pH of the aqueous composition as a result of hydrolytic instability results in a marked change in the viscosity and application properties of the coating.

Moreover, and in order to employ aqueous coatings of higher resin solids content at the desired viscosity, it has been necessary to employ an emulsion system in which a water immiscible component is suspended in an aqueous continuum by means of an emulsifying agent. These emulsion systems are intrinsically unpredictable since the particle size of the emulsion will vary with the agitation of the composition. In this invention we provide a self-emulsifiable composition in which the particle size of the emulsion is substantially the same regardless of whether high speed agitation is used or whether the mixture with water is barely stirred.

The chemical similarity between the oxirane-free hydroxy-functional aromatic polyether which is emulsified, and the hydroxy-functional aromatic polyether epoxides which are incorporated by hydroxy ester formation into the carboxyl-functional copolymer salt which serves as an emulsifying agent is believed to contribute to the achievement of a self-emulsifiable composition.

The preferred epoxy resins have an average molecular weight of at least 1,500. Such high molecular weight aromatic polyethers are incompatible with carboxyl-functional addition polymers. Thus, while both materials may be soluble in the same organic solvent, the solutions do not dissolve in one another and tend to separate. These high molecular weight epoxides provide the best properties, but while lower molecular weight epoxides yield compatible solutions, the higher molecular weight epoxides do not. Substantially complete esterification of the oxirane groups by the carboxyl groups in the copolymer eliminates this incompatibility.

The use of mixtures of monoepoxides and diepoxides is important. It is desired to chemically couple together with the carboxyl copolymer as much epoxide as possible. Some of this epoxide is desirably a diepoxide in order to increase the molecular weight and complexity of the final copolymer. However, the more monoepoxide, the more total aromatic polyether can be chemically combined with the carboxyl copolymer. The maximum proportion of diepoxide is subject to many variables and the only limit is the avoidance of gelation, so this factor will be defined by the term "non-gelled". The high molecular weight and complexity of the copolymers formed herein lowers the proportion of curing agent needed, and this provides tougher and more impact resistant cured coatings.

A further point of considerable importance is the selection of bisphenol-terminated aromatic polyethers to constitute the oxirane-free polyether which finds its way into the discontinuous phase of the emulsion. These possess superior hydrolytic stability in aqueous alkaline medium and the final cured products possess the best properties. On the other hand, defunctionalization of the epoxy resin may be carried out in many different ways, and this invention is not limited to any particular defunctionalization mechanism.

One main component of the final copolymer composition is a solution copolymer of monoethylenically unsaturated monomers comprising at least about 20% of monoethylenically unsaturated carboxylic acid, based on the total weight of monomers. These solution copolymers are themselves well known, being unusual in this invention solely because of the large amount of copolymerized carboxylic acid. The balance of the copolymer is preferably nonreactive under the contemplated conditions of polymerization, prereaction with the epoxy resin, and cure, but small amounts of other reactive monomers may be tolerated, such as hydroxy monomers illustrated by 2-hydroxy ethyl methacrylate, amide monomers illustrated

by acrylamide, or N-methylol monomers illustrated by N-methylol acrylamide.

The nonreactive monomers are illustrated by acrylate and methacrylate esters, such as ethyl acrylate, methyl methacrylate or isobutyl methacrylate, styrene or vinyl toluene, vinyl acetate, vinyl chloride, vinylidene chloride, acrylonitrile, and the like. Their function herein is to enhance solvent solubility and film formation.

The carboxyl-functional monomer in large proportion is essential. The preferred minimum proportion is 30% of the weight of monomers. Methacrylic acid provides the best hydrolytic stability and is very much preferred, but other acids are also useful, such as fumaric acid, acrylic acid crotonic acid, itaconic acid, and the like. Up to 80% of the monomers may be carboxyl functional, but the maximum proportion is more generally determined by retention of solvent solubility.

In preferred practice, the solution copolymer is preformed and reacted with the epoxy resin mixture in the presence of an esterification catalyst, but this is not essential. Thus, copolymerization and coreaction with the epoxy resin mixture under esterification conditions is also possible, or one can add the esterification catalyst after copolymerization is complete in the epoxy resin system. Similarly, the unsaturated acid can be prereacted with the epoxy resin and the copolymerization can be carried out with the mixture of unsaturated epoxy-ester and unreacted unsaturated acid.

Another procedural variation is the introduction of the aromatic polyether which is devoid of oxirane functionality. In preferred practice the epoxy resin which is reacted with the copolymer is a mixture including aromatic polyether devoid of oxirane functionality as well as aromatic polyether having a single oxirane group and aromatic polyether having two oxirane groups. This procedure maximixes compatibility. However, the aromatic polyether devoid of oxirane functionality can be added later, and the mixture can be heated and agitated to enhance the intimacy of the association between the various components.

The copolymer must be made in solution so that it is nongelled and organic solvent-soluble.

The epoxy resin component in the final copolymer composition is a mixture containing at least 5% by weight of aromatic polyether containing oxirane functionality and at least 5% by weight of aromatic polyether devoid of oxirane functionality.

Aromatic polyethers, and particularly diglycidyl ethers thereof are well known and available in commerce. The usual aromatic polyether backbone of the epoxy resin is based on a bisphenol which defines a pair of phenolic groups joined together through an intervening divalent hydrocarbon. The preferred bisphenols have the formula:

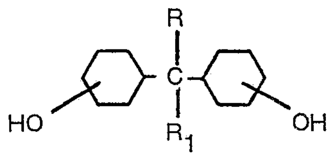

in which R and $R_1$ are alkyl groups containing up to 8 carbon atoms. Bisphenol A is particularly preferred, this compound having the two OH groups in the para position and R and $R_1$ are each methyl.

The epoxy resins which are used herein possess hydroxy groups in addition to epoxy groups, and the higher the molecular weight, the more hydroxy groups are present. In addition, and when the epoxy resin is defunctionalized in order to reduce the proportion of diepoxide therein, additional hydroxy groups are provided. These hydroxy groups may participate in the final curing reaction.

The usual epoxy resins available in commerce are made by reaction of epichlorohydrin with Bisphenol A and have a molecular weight in the range of 350 to 6,000 and comprise or consist of diglycidyl ethers. Mixtures having an average molecular weight of at least 1,500 and containing less than 50% by weight of diglycidyl ethers are preferred for use herein, and a simple way of providing this is by reacting a lower molecular weight diglycidyl ether with between 1 and 2 molar proportions of a bisphenol. This increases molecular weight and provides bisphenol terminal groups. It is especially preferred to use a mixture containing from 3% to 30% by weight of diglycidyl ethers. The molecular weight of the epoxy resins is normally obtained by calculation. It is particularly surprising to be able to combine the higher molecular weight epoxy resins preferred herein with preformed copolymers to provide nongelled compatible compositions, and this is particularly true where the proportion of the epoxyresin which is present is large with a large proportion of it devoid of oxirane functionality so that compatibility by coreaction is not possible. At least 25% of the epoxy resin should be devoid of oxirane functionality.

Defunctionalization of the epoxy resin can be performed in various ways. Reaction with a phenol, particularly a bis-phenol has been mentioned previously. Basic catalysts are normally used in this reaction. Similarly, one can use a carboxylic acid, such as benzoic acid or octanoic acid, to defunctionalize the epoxy resin, basic catalysts being again appropriate. In addition, alcohols can be used, such as octanol, and the etherification reaction with alcohol is fostered by the presence of a catalyst such as boron trifluoride.

The esterification reaction involving the oxirane groups of the epoxy resin and carboxyl functionality is a conventional reaction which is normally carried out in the presence of a small

amount of an amine esterification catalyst. An appropriate catalyst is dimethylamino ethanol, but many others are known. These catalysts are normally used in an amount of from 0.1-2% of the materials subjected to esterification.

From the standpoint of a curing agent, one can use aminoplast resins, phenoplast resins, or mixtures thereof. While the compositions of this invention form films with reasonably good properties on baking in the absence of any external curing agent, from 1-25% of the curing agents noted hereinbefore will serve to enhance the cure. One would normally need at least 15% of curing agent, based on the total weight of resin, and this embraces the proportions which are useful herein. On the other hand, this invention is unusual in enabling the achievement of a superior cure using a smaller proportion of curing agent, from 2-12% being entirely appropriate. The smaller the proportion of curing agent needed to provide the desired solvent insolubility, the less brittleness is introduced into the cured film.

The preferred curing agents are water dispersible. These will be illustrated by hexamethoxy methyl melamine, or by A stage phenol-formaldehyde resols. On the other hand, the compositions of this invention are emulsions, so water dispersibility in the curing agent is not essential.

It will be appreciated that the cure is by baking, and is entirely conventional, the methylol groups introduced by the curing agent reacting with the hydroxy and carboxyl groups present in the copolymer and with the hydroxy groups present in the aromatic polyether devoid of oxirane functionality. It will also be appreciated that acidic curing agents are commonly employed to facilitate the cure, though this is not essential, especially when a phenoplast curing agent is used.

With reference to preferred compositions, the epoxy resin is a mixture of bisphenolic polyethers, at least 10% of which contain oxirane functionality, and at least 10% of which are devoid of oxirane functionality. At least 3% of the total bisphenolic polyethers are provided by diglycidyl ethers. As previously indicated, these bisphenolic polyethers are of relatively high molecular weight, possessing an average molecular weight determined by calculation of at least 1500. The acidic copolymer which is combined with the epoxy resin is a solution copolymer of 30-70% of methacrylic acid, the balance of the monomers being nonreactive as previously defined, the proportions being based on total resin solids. The epoxy resin mixture constitutes from 55-90% of the total resin solids content, and containing sufficient oxirane groups to provide a ratio of oxirane groups to carboxyl groups from 1:4 to 1:10. From 30% to 90% of the carboxyl in the polymer product is reacted with a volatile amine which may be ammonia, or other volatile amine, such as triethyl amine or, preferably, dimethylamino ethanol.

The carboxyl-functional polymers which are preferred generally have an average molecular weight in the range of 5,000 to 20,000, preferably 7,000—15,000. Molecular weight can be controlled by solids content during polymerization, or catalyst concentration, or polymerization temperature, these being known expedients for this purpose. Mercaptan chain termination is preferably avoided since sanitary can use is contemplated and mercaptains are bad smelling materials.

Lastly, and in preferred practice, from 3% to 10% of water dispersible aminoplast resin is added to the mixture.

It will be observed that the preferred epoxy resins are solids, and they are used by dissolving them in a volatile organic solvent. The solvents are subject to wide variation, so long as they do not interfere with the achievement of an emulsion when the acidic copolymer salts are diluted with water. The fact of achieving an emulsion is easily observed by the fact that the aqueous system which is produced is milky, and not clear. Organic solvents of limited water miscibility, such as xylene, toluene and butanol are useful, and they may be used alone or together with water miscible solvents, such as 2-ethoxy ethanol or methyl ethyl ketone.

The aqueous coating compositions of this invention are primarily useful for coating aluminum, tinplated steel, pretreated metals, steel, or metals coated with the same or different resin composition (i.e., a second coat). These aqueous compositions can be used, however, for coating other substrates, such as wood. The most preferred and useful use of the coating compositions is for the interior coating of metal containers that will come in contact with food or beverages because these coatings are water resistant, possess low extractables, and are very impermeable so as to avoid modification of the natural taste or odor of the foods and beverages stored within the can.

Coating can be done by any coating procedure well known to those skilled in the art, including direct roll coating, reverse roll coating, electrodeposition at the anode, spraying, flow coating, and the like. The preferred method, however, in coating the interior of metal containers is by spraying using enough amine for salt formation with from 50% to 90% of the available carboxyl groups, and enough water to provide a final solids content of 18% to 25%. After coating the substrate, the coating is baked for 5 seconds to 30 minutes at between 250°F (121°C) and 600°F (316°C). A typical bake is for 2 minutes at 400°F (204°C).

The invention is illustrated in the following Examples. All proportions herein are by weight unless otherwise stated.

Example 1

An acrylic polymer solution is prepared as follows:

| | Parts by Weight |
|---|---|
| Ethylene glycol monobutyl ether | 451.7 gms |
| Ehtylene glycol monohexyl ether | 47.6 gms |
| n-butanol | 451.7 gms |
| Isopropanol | 349.0 gms |
| Methacrylic acid monomer | 1045.0 gms |
| Styrene monomer | 1045.0 gms |
| Ethyl acrylate monomer | 110.0 gms |
| Benzoyl peroxide (70% in water) | 220.0 gms |
| Benzoyl peroxide (70% in water) | 20.0 gms |
| TOTAL | 3470.0 gms |

Ethylene glycol monobutyl ether, ethylene glycol monohexyl ether, n-butanol and isopropanol are charged to a reaction vessel equipped with a stirrer, reflux condenser, Dean Stark trap, thermometer, addition funnel and nitrogen inlet. the methacrylic acid monomer, styrene monomer, ethyl acrylate monomer and 220 gms benzoyl peroxide are premixed in a mixing vessel. 460 gms of this premix are added to the reactor, the remaining 1960 gms are placed into the addition funnel. The nitrogen flow is started and the batch is heated to 90°C. The remaining 1960 gms of premix is added over three hours. The batch is held for an additional one hour at 90°C. 20 gms benzoyl peroxide are added and the batch is held at 90°C for two hours. The batch is cooled to room temperature. The resulting acrylic polymer solution has a solids content of 63.4%. The acrylic polymer has the composition methacrylic acid/styrene/ethyl acrylate 47.5/47.5/5 by weight and an acid number of 279.7.

A partially defunctionalised epoxy resin is prepared as follows:

| | Parts by Weight |
|---|---|
| Epon 829 liquid epoxy resin | 4634.0 gms |
| Bisphenol A | 2366.0 gms |
| Methyl isobutyl ketone | 524.0 gms |
| Benzoic acid | 183.0 gms |
| Tributylamine | 13.0 gms |
| Ethylene glycol monobutyl ether | 1425.0 gms |
| Ethylene glycol monohexyl ether | 150.0 gms |
| n-butanol | 1425.0 gms |
| TOTAL | 10720.0 gms |

Epon 829 liquid epoxy resin, Bisphenol A and methyl-isobutyl ketone are charged to a reaction vessel equipped with a stirrer, reflux, condenser, Dean Stark trap, thermometer and nitrogen inlet. Epon 829 liquid epoxy resin is a product of Shell Chemical Company and is characterized by a viscosity of 30-70 poises (3-7 PaS), 193—203 epoxide equivalent weight and 3 maximum Gardner color. The nitrogen flow is started and the batch is heated to 140°C. The batch exotherms to 201.5°C. The 524 gms methylisobutyl ketone is removed via the Dean Stark trap. The batch is cooled to 171°C and held for one hour. The oxirane value is measured and is found to be 0.52 meq/gm. The batch is cooled to 150°C and the benzoic acid and tributylamine are added. The batch is held for one hour and the oxirane and acid content are measured. The acid number is 0 and the oxirane level is 0.27 meq/gm. Ethylene glycol monobutyl ether and ethylene glycol monohexyl ether are added. When uniform, the batch is cooled to 110°C and n-butanol is added. The batch is cooled to room temperature. The resulting epoxy resin solution has a solids content of 67%. The epoxy resin has a number average molecular weight in excess of 1500, an acid number of 0 and an oxirane level of 0.27 meq/gm.

The epoxy acrylate polymer solution is prepared as follows:

| | Parts by Weight |
|---|---|
| Acrylic polymer colution (prepared above) | 473.0 gms |
| Dimethylaminoethanol | 1.6 gms |
| Epoxy polymer solution (prepared above) | 1039.0 gms |
| Dimethylaminoethanol | 1569.9 gms |

The acrylic polymer solution, the epoxy polymer solution and the 1.6 gms dimethylaminoethanol are charged to a reactor equipped with a stirrer, condenser, thermometer and a nitrogen inlet. The nitrogen flow is started and the batch is heated to 117°C. The batch is held at 117°C for five hours and the acid and oxirane levels are measured. The acid number is 67 and the oxirane level is less than 0.01 meq/gm. 56.3 gms dimethylaminoethanol are added to partially neutralize the polymer acidity, stirred until uniform and cooled to room temperature. The resulting epoxy acrylate polymer solution has a solids content of 65%. The polymer has the composition epoxy/acrylic — 7030 and is characterized by an acid number of 66.8 and an oxirane value of 0.

A water dispersion of the above produced epoxy acrylate polymer solution is prepared as follows:

| | Parts by Weight |
|---|---|
| Partially neutralized epoxy acrylate polymer solution (prepared above) | 300.0 gms |
| Deionized water | 300.0 gms |
| TOTAL | 600.0 gms |

The epoxy acrylate polymer solution is placed into a dispersion vessel equipped with a stirrer and is heated to 80°C. Agitation is started and the deionized water is added over a 15 minute

period. Agitation is continued until all of the polymer is dispersed. The dispersion is cooled to room temperature. The dispersion has a solids content of 32.9% and is characterized by 7.77 pH, 0.28 micron particle size, 1200 mPaS viscosity (Brookfield #1 spindle, 30 RPM) and a water/organic solvent ratio of 71/29 by weight.

The above prepared dispersion is modified with a melamine-formaldehyde resin, Cymel 370 (American Cyanamid Company) at 7% solids on solids level. The resulting mixture is cast on aluminum substrate with a wire-wound bar. The coated panels are baked 75 seconds total time at 400°F (204°C) in a forced air oven. The baked films display excellent wetting, clarity and gloss. Other film properties are listed below.

| | |
|---|---|
| Methyl ethyl ketone double rubs | 23 |
| Pasteurization adhesion | 10 |
| Pasteurization blush | 10 |
| Wedge bend flexibility | 6+ |

(Rating: 10 = No failure, 0 = Complete failure)

As a matter of interest, the same polymer, without benzoic acid defunctionalization, would gel.

Example 2

Into a 3 liter round bottom flask, equipped with reflux condenser, heating means, stirrer, thermometer and inert gas blanket were charged 672.8 gms of 2-ethoxyethanol and 913.0 gms of a diglycidyl ether of Bisphenol A having an epoxide equivalent weight of 1.1 meq/g (Epon 1004 from Shell Chemical Company). After heating to dissolve the epoxy resin, 96.2 gms of octanoic acid was added together with 2.0 gms of tri-n-butylamine. The reaction mixture was heated at 135—140°C until the acid value fell below 1.

An acrylic copolymer solution was produced by copolymerizing 75.6 parts of ethyl acrylate with 24.4 parts of methacrylic acid in organic solvent solution in 2-ethoxyethanol. The solution copolymer product had a nonvolatile solids content of 71.8% and the solids had an acid number of 158.

400 gms of the epoxy-octanoic acid ester solution produced above was then reacted at 138°C with 167.8 gms of the ethyl acrylate-methacrylic acid copolymer solution produced above. A clear reaction product was obtained with the solids thereof having an acid number of 43.

Ammonia is added to neutralize the copolymer acidity and then hexamethoxymethylmelamine is added (Cymel 300 from American Cyanamid may be used) in an amount of 10 parts per 100 parts of resin solids.

This neautralized copolymer solution is diluted with deionized water to provide an emulsion containing approximately 30% by weight of resin solids and the aqueous composition so obtained is applied to aluminum panels with a wire wound bar to provide a film having a thickness of approximately 0.15 mil (0.0038 mm). Prior to dilution with water, a small amount (0.5% based on the weight of resin solids) of a curing catalyst is added (Alipal CO-436 supplied by General Aniline). The aminoplast cure and its catalysis are conventional. The coated panels were cured by placing them in an oven maintained at 408°F (209°C) for 75 seconds.

The following characteristics are obtained:

| | |
|---|---|
| Methyl ethyl ketone double rubs to remove coating | 42 |
| Wedge bend flexibility | 4 |
| Pasteurization adhesion and blush resistance | 10 |

(Rating scale = 10 = no failure, 0 = complete failure)

## Claim

A non-gelled composition which is self-emulsifiable in water containing hydroxy ester copolymer having carboxyl groups and substantially free of oxirane groups, which composition is the esterification reaction product of (A) an acidic copolymer comprising a solution copolymer of monoethylenically unsaturated monomers containing from 20 to 80 percent by weight monoethylenically unsaturated carboxylic acid monomer based on the total weight of the monomers; and (B) a mixture containing epoxy resin, which mixture includes at least 5 percent by weight of aromatic polyether containing oxirane groups and at least 5 percent by weight of aromatic polyether devoid of oxirane groups, the aromatic polyethers having an average molecular weight of at least 1500, the mixture comprising 40 to 90 percent of the total resin solids and containing sufficient oxirane groups to provide a ratio of oxirane groups to carboxyl groups from 1:2 to 1:20, at least a portion of the carboxyl groups in the hydroxy ester copolymer being reacted with base to render the composition self-emulsifiable in water.

## Revendication

Une composition non gélifiée qui est auto-émulsifiable dans l'eau, contenant un copolymère d'hydroxyester portant des groupes carboxyle et pratiquement exempt de groupes oxirane, composition qui est le produit de la réaction d'estérification de (A) un copolymère acide comprenant un copolymère en solution de monomères a insaturation monoéthylénique contenant de 20 à 80% en poids d'acide carboxylique monomère à insaturation monoéthylénique par rapport au poids total des monomères; et (B) un mélange contenant une résine époxydique, mélange qui inclut au moins 5% en poids d'un polyéther aromatique contenant des groupes oxirane et au moins 5% en poids d'un polyéther aromatique exempt de groupes oxirane, les polyéthers aromatiques ayant un poids moléculaire moyen d'au moins 1.500, le mélange comprenant de 40 à 90% des substances solides résineuses totales et contenant des groupes oxirane en quantité suffisante pour assurer un rapport de 1:2 à 1:20 entre les groupes oxirane et les groupes carboxyle, une partie au moins des groupes carboxyle du copolymère d'hydroxyester ayant été mise à réagir avec une base manière à rendre la composition auto-émulsifiable dans l'eau.

**Patentanspruch**

Nicht-gelierte Mischung, die in Wasser selbst-emulgierbar ist, enthaltend Hydroxyestercopolymere mit Carboxylgruppen und im wesentlichen frei von Oxirangruppen, wobei diese Mischung das Veresterungsreaktionsprodukt von (A) einem sauren Copolymeren aus einem Lösungscopolymeren von monoäthylenisch ungesättigten Monomeren mit 20 bis 80 Gew.-% monoäthylenisch ungesättigten Carboxylsäuremonomeren, bezogen auf das Monomerengesamtgewicht, und (B) einem Gemisch, enthaltend Epoxyharz, ist, wobei das Gemisch wenigstens 5 Gew.-% von aromatischen Polyäther mit Oxirangruppen und wenigstens 5 Gew.-% von aromatischem Polyäther ohne Oxirangruppen enthält, die aromatischen Polyäther ein durchschnittliches Molekulargewicht von wenigstens 1500 haben, das Gemisch 40 bis 90% der Gesamtharzfeststopffe umfaßt und hinreichende Oxirangruppenanteile zur Schaffung eines Verhältnisses von Oxirangruppen zu Carboxylgruppen von 1:2 bis 1:20 enthält, während wenigstens ein Teil der Carboxylgruppen in dem Hydroxyestercopolymeren mit einer Base umgesetzt ist, um die Mischung selbst-emulgierbar in Wasser zu machen.